# EUROPÄISCHE PATENTSCHRIFT

(11) **EP 0 664 228 B1**
(45) Veröffentlichungstag und Bekanntmachung des Hinweises auf die Patenterteilung: **03.09.1997**
(21) Anmeldenummer: 95250007.2
(22) Anmeldetag: 17.01.1995
(51) Int. Cl.: B60B 25/06, B60B 25/04

(54) **Bereiftes Fahrzeugrad**
Vehicle tyred wheel
Roue à pneumatique d'un véhicule

(30) Priorität: 24.01.1994 DE 4402296
(43) Veröffentlichungstag der Anmeldung: 26.07.1995
(73) Patentinhaber: MANNESMANN Aktiengesellschaft, 40213 Düsseldorf (DE)
(72) Erfinder: Gohrbandt, Uwe, D-42781 Haan (DE)
(74) Vertreter: Presting, Hans-Joachim, Dipl.-Ing.

(56) Entgegenhaltungen:
- BE-A- 523 344
- FR-A- 1 068 253
- FR-A- 2 068 615
- US-A- 5 092 661

## Beschreibung

Die Erfindung betrifft ein bereiftes Fahrzeugrad gemäß dem Gattungsbegriff des Hauptanspruchs.

Ein derartiges Rad ist durch die US-PS 5,092,661 offenbart.

Bei Fahrzeugrädern gilt derzeit der Luftreifen als das Konstruktionselement, welches alle betriebsbedingten Kräfte vom Fahrzeug auf die Straße und umgekehrt zu übertragen hat. Dementsprechend konzentrieren sich die Bemühungen der Hersteller auf die Optimierung des Luftreifens, insbesondere im Hinblick auf die Gebrauchseigenschaften, nämlich das Handling, den Rollwiderstand, die Reibkraft-Übertragung zwischen Reifen und Fahrbahn, den Komfort und den Verschleiß, möglichst ohne schon erreichte Vorteile und Qualitäten einzubüßen.

Fahrzeugräder dieser Art sind heutzutage bei Fahrzeugen aller Art bekannt und üblich, insbesondere bei Kraftfahrzeugen und dazugehörigen Anhängern.

Die Entwicklung hat sich in letzter Zeit darauf konzentriert, Verbesserungen am Luftreifen zu finden, insbesondere an der Gürteleinlage desselben. Diese Konzentration der Entwicklungsbemühungen auf den Gürtel- bzw. Laufstreifenbereich der heute bekannten verwendeten Luftreifen lassen jedoch unberücksichtigt, daß auch die konstruktiv versteiften sogenannten Wulste, die sich radial oberhalb der Reifensitze etwa auf Höhe der Karkassenumschläge in den Seitenwänden befinden, infolge der durch die Umfangsstörung an der Aufstandsfläche ausgelösten seitlichen Ausbeulungen ganz erheblich zum Rollwiderstand des Reifens beitragen.

Dieses Problem ist durch Verbesserungen am Gürtel nicht zu beheben bzw. zu beeinflussen. Insbesondere wurde bis jetzt zu wenig berücksichtigt, daß der Reifen nur ein Teil des Radsystems und die Felge, auf der der Reifen montiert wird, das andere Teil dieses Radsystems ist.

Zur Verbesserung der Gebrauchseigenschaften von Luftreifen reicht es demnach nicht aus, Änderungen nur im Gürtelbereich vorzunehmen, sondern es müssen hierzu auch die Seitenwandbereiche des Luftreifens mit den problematischen Wulsten und die Felge in die Lösung einbezogen werden.

Das Fahrzeugrad müsste demnach eine Felge aufweisen, die nicht nur als Halterung für den Luftreifen dient, sondern auch exakt definierte Stützfunktionen für den montierten Reifen übernimmt.

Um die zuvor genannten Anforderungen zu erfüllen, ist ein bereiftes Fahrzeugrad mit einer drehbar zu lagernden Felge mit endständigen und radial nach außen sich erstreckenden Felgenhörnern vorgeschlagen worden, bei dem wenigstens eines der Felgen-Hörner eine größere radiale Länge aufweist.

Die Verlängerung erstreckt sich wenigstens bis etwa in den mittleren Bereich der betreffenden Seitenwand des Luftreifens und verläuft in ihrer radialen Erstreckung steiler, also mehr nach innen geneigt als die natürliche Biegekontur der durch Innendruck stehenden Reifenseitenwand. Vorzugsweise ist das verlängerte Felgenhorn auf der Radseite vorgesehen, die der Fahrzeugmitte zugewandt ist. Nachteilig bei diesem Vorschlag ist, daß das so hergestellte Rad von der Norm abweicht, so daß ein Nachrüsten bereits zugelassener Fahrzeuge ein entsprechende Kosten verursachendes Auswechseln der Räder bedeuten würde. Außerdem ist die Montage des Luftreifens erschwert, da bei einer Vielzahl von Radausführungen das auf der Fahrzeugaußenseite liegende Felgenhorn einen größeren Außendurchmesser aufweist als das innenliegende. Über das verlängerte Felgenhorn kann in keinem Fall der Reifen aufgezogen werden. Weiterhin ist nachteilig, daß Anpassungen an unterschiedliche Anforderungen im Hinblick auf Lenkverhalten und Fahrkomfort die Herstellung eines neuen Rades bedeutet, da das Maß der Verlängerung sowie die Neigung des verlängerten Felgenhornes zur Radachse das Fahrverhalten entscheidend beeinflussen.

Bei einem alternativen Vorschlag wird zur Verlängerung des Felgenhorns ein umlaufender scheibenartiger metallischer Ring auf das Felgenhorn aufgespannt oder aufgeschrumpft. Die Montage eines solchen Ringes ist sehr aufwendig, da dazu Erwärmen des Ringes und ein Abkühlen der Felge erforderlich sind. Außerdem besteht die Gefahr, daß die Schrumpfverbindung durch das elastische Arbeiten des Rades sich lockert. Dies gilt in gleicher Weise auch für die Spannverbindung. Ein weiterer Nachteil ist darin zu sehen, daß durch die montagebedingte geringe erreichbare Durchmesserdifferenz zwischen dem Innendurchmesser des Ringes und dem Außendurchmesser des Felgenhornes der Beitrag einer formschlüssigen Abstützung des Ringes auf dem Felgenhorn stark eingeschränkt ist.

Ein gattungsbildendes bereiftes Fahrzeugrad ist in der US-PS 5,092,661 offenbart. Dieses Fahrzeugrad weist eine drehbar zu lagernde Felge und eine lösbar auf dieser anzuordnenden Luftreifen auf. Der Luftreifen weist einen im Querschnitt torusförmigen Körper mit einer etwa zylindrischen Lauffläche sowie zwei radial verlaufenden Seitenwänden und mit an dem zur Felge weisenden Enden befindlichen, durch zugfeste Kernzüge verstärkten Reifensitzen zum Befestigen des Luftreifens zwischen endständigen und radial nach außen sich erstreckenden Felgenhörnern auf. Auf dem zur Fahrzeugmitte weisenden Felgenhorn ist ein umlaudender scheibenartiger Ring angeordnet, der einen Innendurchmesser aufweist, der geringer ist als der Scheitelpunkt des Normprofils der Felge. Der Ring verlängert das Felgenhorn in radialer Richtung und erstreckt sich wenigstens bis in den Bereich der betreffenden Seitenwand des Luftreifens.
Die Verlängerung verläuft in ihrer radialen Erstreckung steiler also mehr nach innen geneigt als die natürliche Biegekontur der unter Innerdruck stehenden Reifenseitenwand. Damit ein solcher Ring auf die Felge aufgezogen werden kann, weist er auf der Innenseite über den Umfang verteilt mehrere Ausnehmungen auf. Diese Ausnehmungen schwächen den Ring und vermindern die saubere Anlage des Ringes an der Innenseite des Felgenhornbereiches.

Aufgabe der Erfindung ist es, ein gattungsgemäßes Fahrzeug anzugeben, dessen das Felgenhorn verlängernder Ring einfach zu montieren ist bei vollständiger Anlage an den Felgenhornbereich und der einfach und kostengünstig herstellbar ist.

Diese Aufgabe wird durch die im kennzeichnenden Teil des Hauptanspruchs angegebenen Merkmale gelöst. Vorteilhalfte Weiterbildungen sowie eine Verfahren zur Herstellung eines solchen Fahrzeugrades sind in den Unteransprüchen festgelegt.

Der Vorteil der losen Anordnung eines geteilten Felgenringes auf der Innenseite des Felgenhorns ist darin zu sehen, daß die sich auf dem Markt befindenden Räder jederzeit nachrüstbar sind, da am Rad selbst keinerlei bauliche Veränderungen vorgenommen werden müssen. Ausgehend von genormten Rädern sind mit geringen Kosten Anpassungen individuell für jedes Model möglich. Im Unterschied zum bekannten Stand wird kein verschließbarer Stoß benötigt, sondern es ist ausreichend, daß die freien Enden des Felgenringes in Umfangsrichtung gesehen zur Aufnahme von Zugkräften formschlüssig verbindbar sind.
Die Fixierung in axialer Richtung erfolgt durch den aufgepumpten Luftreifen, der den losen Felgenring über einen Teil der radialen Erstreckung an die Innenseite des Felgenhorns preßt. Die formschlüssige Verbindung dient ausschließlich der Übertragung von Zugkräften und kann in verschiedenartiger Weise erzeugt werden, beispielsweise durch eine an den freien Enden vorgesehene Querschnittsform, die zwei zusammensteckbaren Einzelelementen eines Puzzlespieles entspricht. Damit die Ausnehmung im Hinblick auf die zu übertragenden Kräfte nicht zu groß wird,kann man im Trennbereichmehrere gleichartige Verbindungen vorsehen. Der wesentliche Vorteil des vorgeschlagenen Felgenringes ist in der leichteren Montage zu sehen, ohne daß die den Luftreifen stützende Funktion eingeschränkt wird. Es sind keinerlei Werkzeuge erforderlich, so daß die Montage von jedem Monteur in einer Reifen-Werkstatt durchgeführt werden kann. Dabei ist es unerheblich, ob der Luftreifen auf der Felge schon aufgezogen ist oder nicht.

Auch der für den Felgenring verwendete Werkstoff ist in einer großen Bandbreite frei wählbar, so daß metallische wie nichtmetallische Werkstoffe zum Einsatz kommen können. Bei großen LKW-Rädern wird man wegen der zu übertragenden Kräfte und Biegemomente einen Felgenring aus Stahl wählen, aber ein aushärtbarer Leichtmetall-Werkstoff sowie beispielsweise ein faserverstärkter Kunststoff können ebenso zum Einsatz kommen. Der letztgenannte Werkstoff hätte nicht nur den Vorteil des geringen Gewichtes, sondern auch den der Vermeidung von Kontaktkorrosion.

Die Höhe des Felgenringes und dessen Neigung in bezug auf die Radachse sowie der Verlauf der langen Achse der Querschnittsfläche bestimmen ganz wesentlich die gewünschte Abstützung der Reifenseitenwand und damit die Verbesserung der Gebrauchseigenschaften eines so hergestellten Fahrzeugrades. Die Variationsbreite ist sehr groß, so daß ganz individuell im Hinblick auf mehr oder weniger sportliches Lenkverhalten und mehr oder weniger Fahrkomfort alle Zwischenstufen einstellbar sind. Es besteht sogar die Möglichkeit, den Felgenring gegen einen anderen auszutauschen, falls nach entsprechenden Fahrkilometern ein anderes Fahrverhalten gewünscht wird.

Der Anwendungsbereich erstreckt sich auf Räder sowohl für PKW's als auch für Nutzfahrzeuge. Die Anordnung des erfindungsgemäßen Felgenringes ist für Stahlräder als auch für Räder aus Leichtmetall geeignet. Der innere Endbereich des Felgenringes ist mit einer Kontur versehen, so daß nach dem Aufpumpen des Luftreifens der Felgenring zentriert an der Innenseite des Felgenhornes zur Anlage kommt.

Eine Möglichkeit besteht darin, die Kontur dem Übergang zwischen Felgenhorn und Reifensitzfläche anzupassen. Alternativ kann man die Kontur auch der innenliegenden Felgenhornkontur angleichen.

Der Innendurchmesser des Felgenringes kann sich über einen Bereich erstrecken, der nach unten durch den Durchmesser der Reifensitzfläche und nach oben hin durch die nach dem Stand der Technik entsprechend maximal mögliche geringe Durchmesserdifferenz bei einer Schrumpfverbindung begrenzt wird. Mit dem erfindungsgemäßen losen geteilten Felgenring ist wegen der möglichen größeren überbrückbaren Durchmesserdifferenz eine wesentlich längere Abstützfläche für den anliegenden Felgenring erreichbar. Vorzugsweise wird der Innendurchmesser des Felgenringes im Bereich des Felgeneckpunktes liegen, da dann die Abstützung besonders wirksam ist. Der gedachte Felgeneckpunkt ergibt sich aus dem Schnittpunkt der gedachten Verlängerung der Reifensitzfläche mit der gedachten Verlängerung der Felgenhornkontur. Die Querschnittsfläche des Felgenringes kann gerade, abschnittsweise unterschiedlich geneigt oder teilweise durchgehend gekrümmt sein. Dies ist eine Frage der Feinabstimmung auf den jeweils verwendeten Reifentyp im Hinblick auf ein möglichst knickfreies Anschmiegen der Seitenwand des Luftreifens an den Felgenring.

Der erfindungsgemäße Felgenring kann prinzipiell an jeder Felgenwandseite angeordnet werden, vorzugsweise aber auf der der Fahrzeugmitte zugewandten Seite. Bei LKW-Rädern in Zwillingsanordnung wird der Felgenring beim äußeren Rad an dem zur Schüsselseite weisenden Horn und bei dem baugleichen inneren Rad wie beim Vorderrad am anderen Horn angeordnet. Dies hat den Vorteil, daß es jeweils nur einen Felgen- bzw. Felgenringtyp gibt und damit die Lagerhaltung minimiert wird.

Die Herstellung des erfindungsgemäßen Felgenringes ist einfach und größtenteils mit vorhandenen Einrichtungen durchführbar. Als Ausgangsmaterial wird vorzugsweise ein endloser Blechstreifen entweder flacheben oder vorprofiliert verwendet. Dieser wird auf Länge geschnitten und eingerollt. Wahlweise wird die gewünschte Querschnittskonfiguration an den freien Enden am offenen oder vorher zusammengeschweißten Ring angebracht. Das dabei verwendete Verfahren kann ein Stanzen oder ein Schneiden beispielsweise mit Laser oder Wasserstrahl sein. Damit im Falle des vorherigen Schweißens der Felgenring sowohl an der Seitenwand des Reifens als auch am Felgenhorn satt zur Anlage kommt, muß der Schweißnahtbereich auf beiden Seiten sauber d. h. blecheben verputzt werden.

In der Zeichnung wird anhand verschiedener Ausführungsformen der erfindungsgemäße Felgenring näher erläutert.

Es zeigen:
- Figur 1: einen skizzenartigen halbseitigen Querschnitt durch ein erfindungsgemäßes Fahrzeugrad
- Figur 2: wie Fig. 1 aber mit einer anderen Ausführungsform des Felgenringes
- Figur 3a,b: im vergrößerten Maßstab eine Draufsicht des Trennbereiches nach der Montage
- Figur 4: einen Schnitt einer Felgenringausführung gemäß Fig. 1 vor der Montage
- Figur 5: im vergrößerten Maßstab einen Abschnitt der Ausführung gemäß Figur 1, bzw. Figur 4 Figur 6a,b wie Fig. 4 und 5, aber mit einer anderen Ausführungsform des Felgenringes
- Figur 7a,b: wie Fig. 6 aber mit einer weiteren Ausführungsform des Felgenringes
- Figur 8: wie Fig. 4, aber mit einem Zusatzring
- Figur 9: wie Fig. 5, aber mit einem Abdeckring

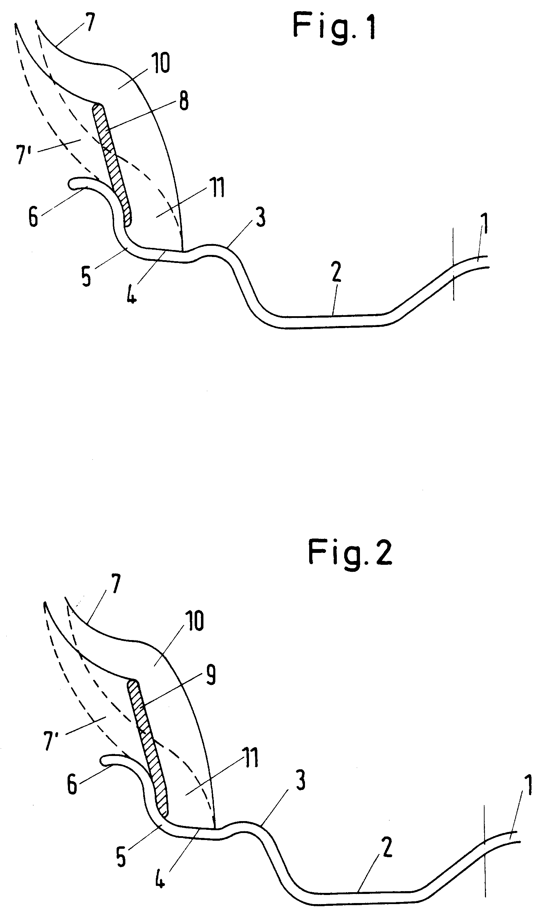

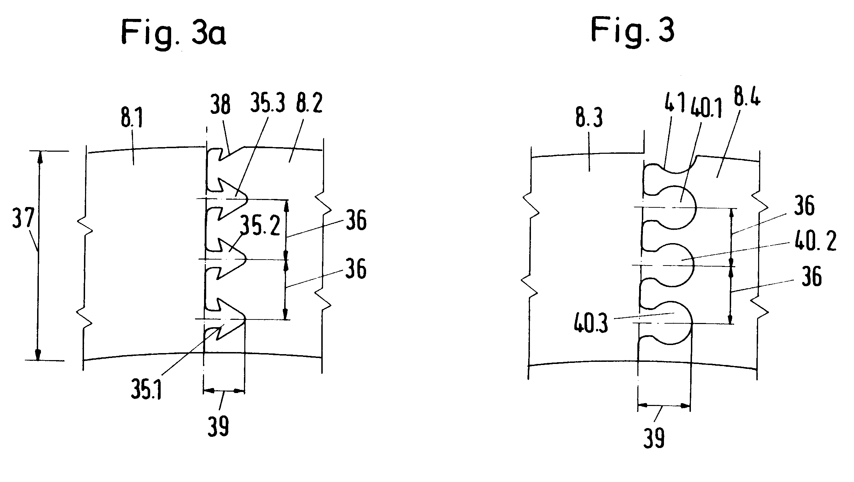

In den Figuren 1 und 2 sind skizzenartig in einem halbseitigen Querschnitt ein Fahrzeugrad mit zwei verschiedenen Ausführungsformen des erfindungsgemäßen Felgenringes dargestellt.
Die Felge 1 weist ein Tiefbett 2, einen Hump 3 und eine schräg nach außen verlaufende Reifensitzfläche 4 auf. Daran schließt sich mit einem Übergang 5 eines der beiden endständigen, radial nach außen sich erstreckenden Felgenhörner 6 an. Mit gestrichelten Linien ist der Sitz des Luftreifens 7' ohne den erfindungsgemäßen Felgenring 8,9 dargestellt. In Figur 1 als auch in Figur 2 ist erkennbar, wie der jeweilige Felgenring 8,9 nach den Aufpumpen des Luftreifens an der Innenseite des Felgenhornes 6 zur Anlage kommt. Einzelheiten dazu sind in den Figuren 3 bis 5 dargestellt. In radialer Richtung erstreckt sich der Felgenring 8,9 bis in den Bereich der Seitenwand 10 des Luftreifens 7. Auf die Darstellung der Einzelheiten des Reifensitzes 11 wird hier verzichtet. In beiden Figuren 1,2 ist deutlich zu erkennen, daß durch den Felgenring 8,9 die Reifenseitenwand 10 mehr nach innen gedrückt und damit vorgespannt wird im Unterschied zur natürlichen Biegekontur (gestrichelte Linie) des Reifens 7'.
Die beiden in den Figuren 1,2 dargestellten Felgenringe 8,9 unterscheiden sich in der Weise, daß die Längsachse der Querschnittsfläche bei der Ausführungsform gemäß Figur 1 gerade verläuft. In Figur 2 weist dagegen die lange Achse der Querschnittsfläche zwei Abschnitte mit unterschiedlichen Neigungen auf, wobei der Abschnitt oberhalb des Felgenhornes 6 etwas mehr nach außen geneigt ist. Dieses Abknicken kann als Abstimmungsparameter zur Veränderung der Charakteristik der Gebrauchseigenschaften des Fahrzeugrades benutzt werden.

In Figur 3a,b sind in einer Draufsicht in einem vergrößerten Maßstab der Trennbereich des erfindungsgemäß geteilten Felgenringes nach der Montage dargestellt. Der geteilte Felgenring 8 gemäß der Ausführung nach Fig. 1 weist zwei freie Enden 8.1; 8.2 bzw. 8.3; 8.4 auf, die so gestaltet sind, daß sie in Umfangsrichtung gesehen eine formschlüssige Verbindung bilden, die in der Lage ist, Zugkräfte zu übertragen. Beispielsweise ist das links liegende freie Ende 8.1 (Teilbild a) mit tannenbaumartigen Fortsätzen 35.1 - 35.3 versehen, die sich im Abstand 36 voneinander über die ganze Breite 37 des Felgenringes 8 erstrecken. Um die formschlüssige Verbindung bilden zu können, ist das gegenüberliegende freie Ende 8.2 mit komplementär zu den Fortsätzen 35.1 - 35.3 passenden Ausnehmungen 38 versehen. Die umfangsmäßige Erstreckung 39 der Fortsätze 35.1 - 35.3 bzw. der Ausnehmungen 38 ist eine Frage der Zweckmäßigkeit und der einfachen Herstellbarkeit. Im Teilbild b ist ein vergleichbarer Trennbereich dargestellt, nur mit dem Unterschied, daß die Fortsätze 40.1 - 40.3 bzw. die dazugehörigen Ausnehmungen 41 anders gestaltet sind.

Die Vielzahl der möglichen Ausgestaltungen des Trennbereiches sind praktisch nicht darstellbar, wesentlich ist nur, daß die Verhakung der beiden freien Enden 8.1; 8.2 bzw. 8.3; 8.4 zu einer formschlüssigen Verbindung in Umfangsrichtung führt. Im einfachsten Fall ist dazu ein Fortsatz 35.2 und eine dazugehörige Ausnehmung 38 ausreichend. Die axiale Fixierung der beiden freien Enden 8.1; 8.2 bzw. 8.3; 8.4 erfolgt in jedem Fall durch den aufgepumpten Luftreifen 7, der den Felgenring 8,9 wie in den Figuren 1,2 zu erkennen ist, über einen Teil der radialen Erstreckung an die Innenseite des Felgenhorns 6 preßt.
Auch bei nahezu luftleeren Reifen bleibt die Verbindung durch die Fixierung des Reifenfußes 11 am Hump 3 aufrecht erhalten.

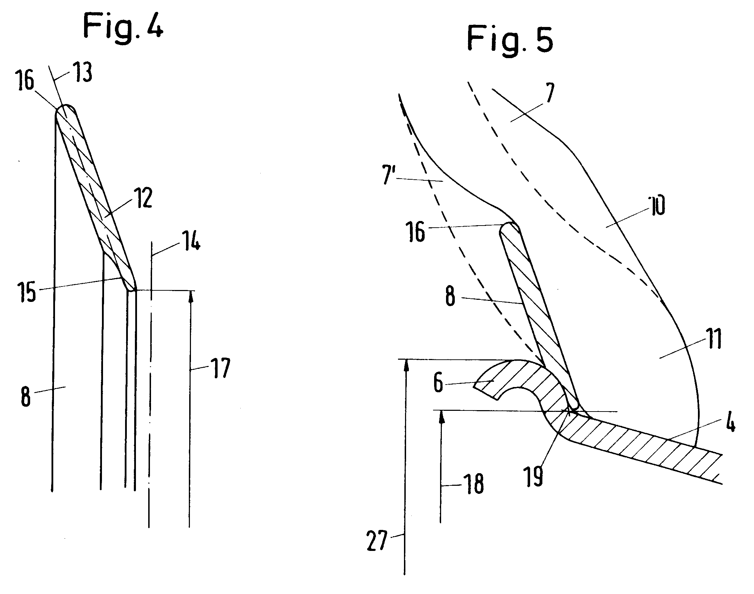

In Figur 4 ist ein Schnitt und in Figur 5 in einem vergrößerten Maßstab die in Figur 1 gezeigte Ausführungsform des Felgenringes 8 dargestellt. Zur Verdeutlichung ist in die Querschnittsfläche 12 die lange Achse 13 eingezeichnet worden. Im Vergleich dazu ist die Lage des auf der Radachse stehenden Lotes 14 dargestellt. Damit wird deutlich, daß die Querschnittsfläche 12 des Felgenringes 8 nicht in der Lotebene liegt, sondern abgewinkelt dazu. Der innere Endbereich des Felgenringes 8 weist eine Kontur 15 auf. Diese ist so ausgebildet, daß sie der innenliegenden Kontur des Felgenhornes 6 entspricht. Der radial auswärts liegende Bereich 16 des Felgenringes 8 ist abgerundet, damit die Seitenwand 10 des Luftreifens 7 bei der Walkarbeit nicht in Mitleidenschaft gezogen wird oder anders ausgedrückt, ein verträglicher Übergang an dieser Stelle erreicht wird. In der Beschreibung ist bereits darauf hingewiesen worden, daß der Innendurchmesser des Felgenringes einen bestimmten Bereich überdecken kann. In dem hier dargestellten Ausführungsbeispiel liegt vorzugsweise der kleinste Innendurchmesser 17 des Felgenringes 8 im Bereich des Felgeneckpunktes 19. Ganz präzis ausgedrückt liegt der Innendurchmesser 17 etwas oberhalb des Radius bzw. des Durchmessers 18 des Felgeneckpunktes 19. Der Innendurchmesser 17 kann auch größer gewählt werden, aber im gleichen Maße nimmt die stützende Wirkung der Anlagefläche des Felgenringes 8 am Felgenhorn 6 ab. Der gedachte Felgeneckpunkt 19 ist der Schnittpunkt der gedachten Verlängerung der Reifensitzfläche 4 mit der gedachten Verlängerung der innenliegenden Kontur des Felgenhornes 6.

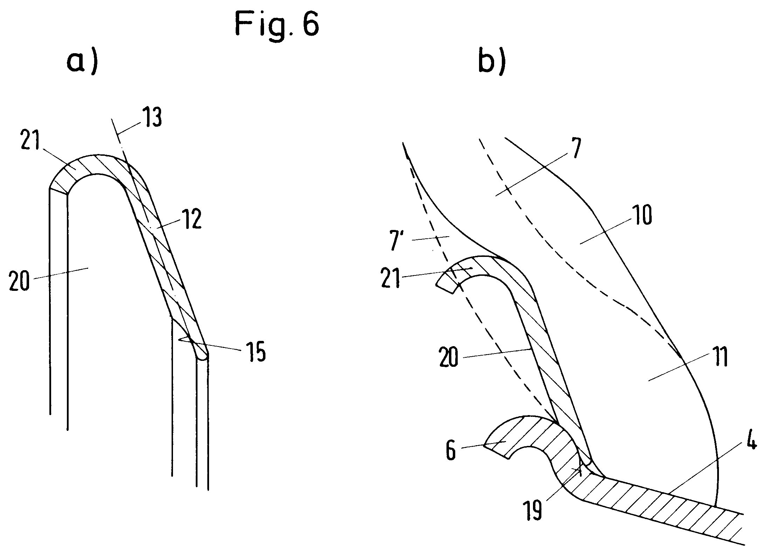

Figur 6a,b ist eine vergleichbare Darstellung wie Fig. 4,5, jedoch mit einer anderen Ausführungsform eines Felgenringes 20. Im Unterschied zur Darstellung in Figur 3 ist der radial auswärts liegende Bereich des Felgenringes 20 nach außen hin umgebogen 21, vergleichbar wie ein Felgenhorn. Man kann deutlich erkennen, daß die Anschmiegung des Luftreifens 7 dadurch abgerundet erfolgt und Knicke oder Kanten vermieden werden.

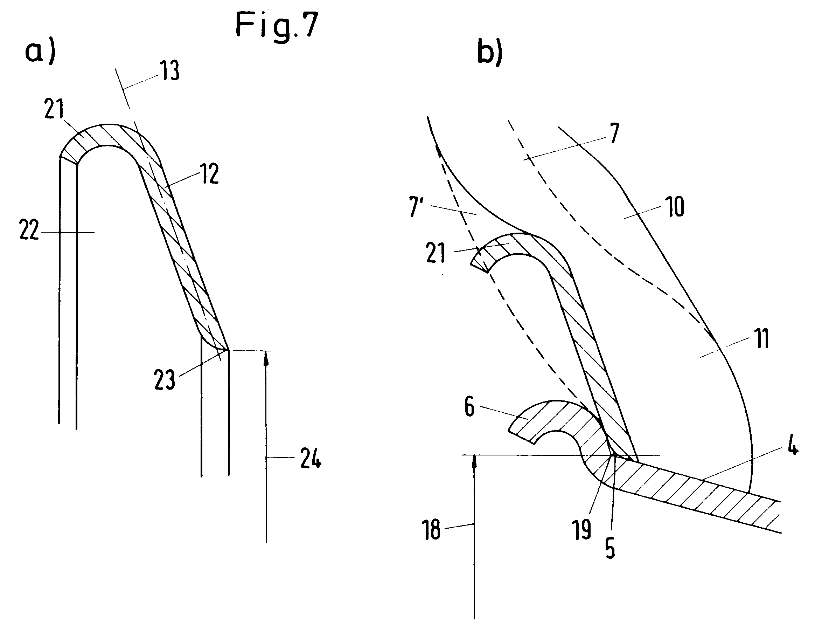

Figur 7a,b zeigt eine weitere Ausführungsform eines Felgenringes 22. Im Unterschied zu Figur 6a,b ist der innere Endbereich 23 anders ausgebildet. Die Kontur dieses Endbereiches 23 entspricht der Kontur des Überganges 5 zwischen Reifensitzfläche 4 und Felgenhorn 6. In diesem Fall kann der innere Endbereich 23 des Felgenringes 22 unter den Felgeneckpunkt 19 rutschen, so daß der Innendurchmesser 24 des Felgenringes 22 kleiner ist als der Durchmesser 18 des Felgeneckpunktes 19. Diese Ausbildung markiert auch die Untergrenze des Innendurchmessers 24 des Felgenringes 22. Unter Berücksichtigung der Fertigungstoleranzen für die Felge und den Felgenring sollte der kleinstmögliche Innendurchmesser 24 des Felgenringes 22 immer etwas größer sein als der äußere Durchmesser der Reifensitzfläche 4 an dieser Stelle. Wird der Innendurchmesser 24 zu klein gewählt, dann liegt der Felgenring 22 nach der Montage nicht mehr lose und eine Zentrierung des Felgenringes 22 nach dem Aufpumpen des Luftstreifens 7 ist nicht möglich bzw. der Felgenring 22 liegt in Umfangsrichtung gesehen nur stellenweise an.

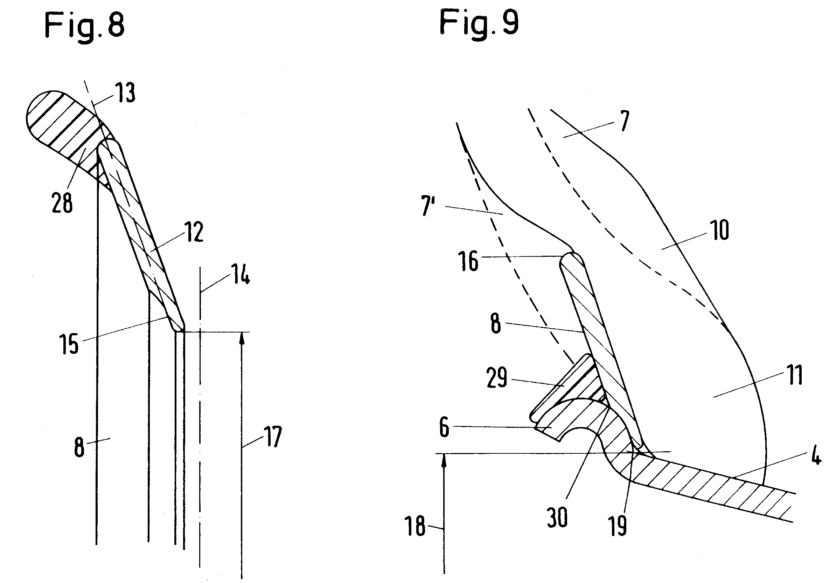

Figur 8 zeigt einen vergleichbaren Felgenring 8 wie der in Figur 4, aber mit einem Zusatzring 28, der am radial auswärts liegenden Bereich angeordnet ist. Dieser Zusatzring 28 ist eine Alternative zu einem Felgenring 20 mit umgebogenen Ende 21, wie beispielsweise in Fig. 6a dargestellt. Vorzugsweise wird dieser Zusatzring 28 aus einem plastischen Material hergestellt und am Felgenring 8 beispielsweise anvulkanisiert oder angeklebt. Diese Alternative hat den Vorteil, daß der Felgenring 8 im Vergleich zu dem 20 mit einem umgebogenen Ende 21 leicht herstellbar ist. Der Zusatzring 28 schmiegt sich infolge der Nachgiebigkeit sehr gut an die Reifenseitenwand 10 an und sorgt für einen verträglichen Übergang der unterschiedlichen Steifigkeiten.

In Figur 9 ist die Anordnung eines Abdeckringes 29 im Zwickelbereich zwischen Felgenhorn 6 und Felgenring 8 dargestellt. Dieser Abdeckring 29, der wahlweise aus Kunststoff oder Gummi hergestellt wird, erfüllt zum einen die Funktion, daß der im Fahrbetrieb atmende Spalt 30 sauber abgedeckt ist. Dies ist von Bedeutung im Hinblick auf Vermeidung einer möglichen Spaltkorrosion. Darüberhinaus verstärkt er die Stützfunktion des Felgenringes 8, da er einen Widerstand bildet, wenn im Fahrbetrieb durch den arbeitenden Luftreifen 7 der Felgenring 8 elastisch nach außen gedrückt wird. Den Schutz des Felgenringes 8 vor Korrosionsangriff kann man auch in der Weise verbessern, indem man ihn mit einem Lacküberzug bzw. einer Gummierung versieht.

## Patentansprüche

1. Bereiftes Fahrzeugrad mit einer drehbar zu lagernden Felge (1) und einem lösbar auf dieser anzuordnenden Luftreifen (7), der einen im Querschnitt torusfömigen Körper mit einer etwa zylindrischen Lauffläche sowie zwei radial verlaufenden Seitenwänden und mit an den zur Felge (1) weisenden Enden befindlichen, durch Drahteinlagen verstärkten Reifensitzen (11) zum Befestigen des Luftreifens (7) zwischen endständigen und radial nach außen sich erstreckenden Felgenhörnern (6) aufweisen und auf dem zur Fahrzeugmitte weisenden Felgenhorn (6) ein umlaufender flacher Felgenring (7) angeordnet ist, der einen Innendurchmesser aufweist, der geringer ist als die äußerste radiale Erstreckung des Normprofils der Felge (1) und der das Felgenhorn (6) in radialer Richtung verlängert und sich wenigstens bis in den Bereich der betreffenden Seitenwand (10) des Luftreifens (7) erstreckt, wobei die Verlängerung in ihrer radialen Erstreckung steiler, also mehr nach innen geneigt verläuft als die natürliche Biegekontur der unter Innendruck stehenden Reifenseitenwand (10),
dadurch gekennzeichnet,
daß der flache Felgenring (8, 9, 20, 22) geteilt und auf der Innenseite des Felgenhorns (6) lose angeordnet ist und die freien Enden (8.1, 8.2, 8.3, 8.4) des Felgenringes (8, 9, 20, 22) zur Bildung eines in Umfangsrichtung formschlüssig geschlossenen Ringes mindestens eine komplementär zueinander passende Querschnittsform (35, 38, 40, 41) aufweisen.

2. Bereiftes Fahrzeugrad nach Anspruch 1,
dadurch gekennzeichnet,
daß in radialer Richtung gesehen der Trennbereich mehrere gleichartig ausgebildete Querschnittsformen (35.1-35.3; 40.1-40.3) aufweist.

3. Bereiftes Fahrzeugrad nach Anspruch 1 oder 2,
dadurch gekennzeichnet,
daß der radial ausweärts liegende Bereich des Felgenringes (20, 22) vergleichbar wie ein Felgenhorn nach außen hin umgebogen (21) ist.

4. Bereiftes Fahrzeugrad nach Anspruch 1 oder 2,
dadurch gekennzeichnet,
daß am radial auswärts liegenden Bereich des Felgenringes (8) ein konturierter nach auswärts geneigter Zusatzring (28) befestigt ist.

5. Bereiftes Fahrzeugrad nach einem der Ansprüche 1 bis 4,
dadurch gekennzeichnet,
daß im Zwickelbereich zwischen Felgenhorn (6) und Ring (8) ein Abdeckring (29) angeordnet ist.

6. Bereiftes Fahrzeugrad nach einem der Ansprüche 1 bis 5,
dadurch gekennzeichnet,
daß für den Felgenring (8, 9, 20, 22) ein metallischer Werkstoff verwendet wird.

7. Bereiftes Fahrzeugrad nach einem der Ansprüche 1 bis 5,
dadurch gekennzeichnet,
daß für den Felgenring (8, 9, 20, 22) ein faserverstärkter Kunststoff verwendet wird.

8. Verfahren zur Herstellung eines bereiften Fahrzeugrades gemäß dem Anspruch 1,
dadurch gekennzeichnet,
daß als Ausgangsmaterial für einen metallischen Felgenring (8, 9, 20, 22) ein endloser Blechstreifen verwendet wird, der auf Länge geschnitten, eingerollt und dessen freie Enden mit der vorgegebenen Querschnittskontur durch Stanzen oder Schneiden versehen werden.

9. Verfahren nach Anspruch 8,
dadurch gekennzeichnet,
daß nach dem Einrollen die freien Enden miteinander verschweißt werden und der Schweißnahtbereich auf beiden Seiten sauber verputzt wird und die Trennung durch Stanzen oder Schneiden erfolgt.

## Claims

1. A tyred vehicle wheel with a rim (1) which is to be mounted rotatably and a pneumatic tyre (7) to be arranged detachably thereon, which has a body of toroidal cross-section with an approximately cylindrical tread and two radially extending sidewalls and with tyre seats (11) reinforced by wire inserts located at the ends pointing towards the rim (1) for fastening the pneumatic tyre (7) between terminal wheel flanges (6) extending radially outwards and a circumambient flat rim ring (8) is arranged on the wheel flange (6) facing towards the centre of the vehicle, which ring has an internal diameter which is less than the outermost radial extent of the standard profile of the rim (1) and which extends the wheel flange (6) in the radial direction and extends at least into the region of the relevant sidewall (10) of the pneumatic tyre (7), the extension in its radial extent extending more steeply, i.e. inclined more greatly inwards, than the natural bending contour of the tyre sidewall (10) under pressure,
characterised in that
the flat rim ring (8, 9, 20, 22) is divided and is arranged loosely on the inside of the wheel flange (6) and the free ends (8.1, 8.2, 8.3, 8.4) of the rim ring (8, 9, 20, 22) have at least one cross-sectional form (35, 38, 40, 41) which matches in complementary manner to form a ring which is positively closed in the peripheral direction.

2. A tyred vehicle wheel according to Claim 1, characterised in that, viewed in the radial direction, the region of separation has a plurality of identically designed cross-sectional forms (35.1-35.3; 40.1-40.3).

3. A tyred vehicle wheel according to Claim 1 or 2, characterised in that the region of the rim ring (20, 22) located radially outwards is bent around (21) outwards comparably to a wheel flange.

4. A tyred vehicle wheel according to Claim 1 or 2, characterised in that a contoured additional ring (28) inclined outwards is attached to the region of the rim ring (8) located radially outwards.

5. A tyred vehicle wheel according to one of Claims 1 to 4, characterised in that a covering ring (29) is arranged in the gore region between the wheel flange (6) and the ring (8).

6. A tyred vehicle wheel according to one of Claims 1 to 5, characterised in that a metallic material is used for the rim ring (8, 9, 20, 22).

7. A tyred vehicle wheel according to one of Claims 1 to 5, characterised in that a fibre-reinforced synthetic material is used for the rim ring (8, 9, 20, 22).

8. A method for the production of a tyred vehicle wheel according to Claim 1, characterised in that an endless metal strip is used as the starting material for a metallic rim ring (8, 9, 20, 22), which is cut to length, rolled round and the free ends of which are provided with the given cross-sectional contour by punching or cutting.

9. A method according to Claim 8, characterised in that after rolling-round the free ends are welded together and the weld seam region is trimmed cleanly on both sides, and the separation is effected by punching or cutting.

## Revendications

1. Roue de véhicule à pneu, comportant une jante (1) devant être montée de façon rotative et un pneu (7) devant être agencé de façon amovible sur celle-ci, qui présente un corps torique en section transversale ayant une surface de roulement sensiblement cylindrique, ainsi que deux épaulements s'étendant radialement, et ayant des talons (11), renforcés par des garnitures de fil métallique, se trouvant aux extrémités tournées vers la jante (1), pour fixer le pneu (7) entre des bords de jante (6) d'extrémité s'étendant radialement vers l'extérieur, et, sur le bord de jante (6) tourné vers le centre du véhicule, il est agencé un cercle de blocage de pneu plat périphérique, qui présente un diamètre interne qui est plus petit que l'extension radiale la plus externe du profil standard de la jante (1) et qui prolonge le bord de jante (6) en direction radiale et s'étend au moins jusque dans la zone de l'épaulement correspondant (10) du pneu (7), le prolongement, dans son extension radiale, s'étendant de façon plus raide, c est-à-dire de façon plus inclinée vers l'intérieur que le contour de cintrage naturel de l'épaulement de pneu (10) se trouvant sous une pression interne,
caractérisée en ce que le cercle de blocage de pneu plat (8,9,20,22) est subdivisé et est agencé de façon lâche sur la face interne du bord de jante (6), et les extrémités libres (8.1,8.2,8.3,8.4) du cercle de blocage de pneu (8,9,20,22) présentent, pour former un cercle mécaniquement fermé en direction périphérique, des formes en section transversale (35,38,40,41) adaptées les unes aux autres de façon complémentaire.

2. Roue de véhicule à pneu selon la revendication 1,
caractérisée en ce que, en direction radiale, la zone de séparation présente plusieurs formes en section transversale réalisées de la même façon (35.1-35.3;40.1-40.3).

3. Roue de véhicule à pneu selon la revendication 1 ou 2,
caractérisée en ce que la zone radialement externe du cercle de blocage de pneu (20,22) est cintrée (21) vers l'extérieur de façon comparable à un bord de jante.

4. Roue de véhicule à pneu selon la revendication 1 ou 2, caractérisée en ce que, sur la zone radialement externe du cercle de blocage de pneu (8), il est fixé un cercle supplémentaire (28), incliné vers l'extérieur, profilé.

5. Roue de véhicule à pneu selon une des revendications 1 à 4,
caractérisée en ce que, dans la zone de coin entre le bord de jante (6) et le cercle (8), il est agencé une bague de recouvrement (29).

6. Roue de véhicule à pneu selon une des revendications 1 à 5,
caractérisée en ce qu'une matière métallique est utilisée pour le cercle de blocage de pneu (8,9,20,22).

7. Roue de véhicule à pneu selon une des revendications 1 à 5,
caractérisée en ce qu'une matière synthétique renforcée par des fibres est utilisée pour le cercle de blocage de pneu (8,9,20,22).

8. Procédé pour fabriquer une roue de véhicule à pneu selon la revendication 1,
caractérisé en ce que, comme matière de départ pour un cercle de blocage de pneu métallique (8,9,20,22), il est utilisé une bande de tôle sans fin qui est coupée en longueur, enroulée, et dont les extrémités libres sont munies d'un contour en section transversale prédéfini par estampage ou découpe.

9. Procédé selon la revendication 8,
caractérisé en ce que, après l'enroulement, les extrémités libres sont soudées l'une à l'autre et la zone du cordon de soudure est nettoyée des deux côtés et la séparation est effectuée par estampage ou découpe.
